# EUROPÄISCHE PATENTSCHRIFT

(11) **EP 1 795 148 B1**
(45) Veröffentlichungstag und Bekanntmachung des Hinweises auf die Patenterteilung: **10.03.2010**
(21) Anmeldenummer: 06024672.5
(22) Anmeldetag: 29.11.2006
(51) Int. Cl.: A61C 8/00

(54) **Dentalimplantat**
Dental implant
Implant dentaire

(30) Priorität: 01.12.2005 DE 102005058496
(43) Veröffentlichungstag der Anmeldung: 13.06.2007
(73) Patentinhaber: DENTAURUM J.P. WINKELSTROETER KG, 75228 Ispringen (DE)
(72) Erfinder: Grosse, Tobias, 75228 Ispringen (DE); Bauer, Andreas, 76646 Bruchsal (DE)
(74) Vertreter: Hoeger, Stellrecht & Partner Patentanwälte

(56) Entgegenhaltungen:
- EP-A- 0 826 343
- EP-A- 1 709 937
- EP-A1- 1 021 996
- DE-A1- 2 609 262
- DE-A1-102004 017 344
- US-A1- 2003 158 554
- US-A1- 2004 006 346
- US-A1- 2004 033 469

## Beschreibung

Die Erfindung betrifft ein Dentalimplantat mit den Merkmalen des Oberbegriffes von Patentanspruch 1.

Ein Dentalimplantat mit einem Implantathals zur Verankerung eines Aufbauteiles und mit einem Implantatkörper, der ein Außengewinde aufweist, ist aus der Gebrauchsmusterschrift DE 202 11 157 U1 bekannt. Ausgehend von einem zylindrischen Implantathals nimmt bei dem bekannten Implantat der Gewindekern des Außengewindes von crestal nach apikal im Durchmesser konisch ab, während der Außendurchmesser des Außengewindes über dessen gesamte Länge konstant bleibt. Von crestal nach apikal nimmt daher die Tiefe der Gewindegänge kontinuierlich zu.

In :der Offenlegungsschrift DE 102 38 091 A1 wird ein Dentalimplantat beschrieben, bei dem der Gewindekern und der Außendurchmesser drei crestal nach apikal aufeinanderfolgende Abschnitte aufweisen, nämlich einen sich an den Implantathals anschließenden Crestalabschnitt mit konstantem Außendurchmesser des Außengewindes und in apikaler Richtung konischem Gewindekern, einem Mittenabschnitt mit konstantem Außendurchmesser des Außengewindes und konstantem Durchmesser des Gewindekerns sowie einem Spitzenabschnitt mit in apikaler Richtung konischem Außendurchmesser des Außengewindes und konischem Durchmesser des Gewindekerns.

Die spezielle Ausgestaltung von Gewindekern und Durchmesser des Außengewindes soll die Verankerung des Implantates im Kieferknochen verbessern. Es hat sich allerdings gezeigt, dass eine optimale Verankerung nicht in allen Fällen innerhalb kurzer Zeit erzielt werden kann.

Aus US 2004/0006346 A1 ist ein Implantat bekannt mit einem Außengewinde, das aus einem ersten Gewinde und einem zweiten Gewinde gebildet ist, die in einer transversalen Grenzebene ineinander übergehen. Die Gewindespirale des eingängigen ersten Gewindes setzt sich in der Gewindespirale des dreigängigen zweiten Gewindes fort. Das zweite Gewinde ist als Feingewinde ausgebildet mit einem kleineren Abstand von Gewindegang zu Gewindegang als das erste Gewinde.

Aus der DE 10 2004 017 344 A1 ist ein Dentalimplantat bekannt mit einem Implantathals zur Verankerung eines Aufbauteiles und mit einem Implantatkörper, der ein Außengewinde aufweist. Das Außengewinde umfasst ein erstes und ein zweites Gewinde, die einander überlagert sind. Das zweite Gewinde hat einen kleineren Abstand von Gewindegang zu Gewindegang als das erste Gewinde. Der Flankendurchmesser des zweiten Gewindes ist kleiner als der Flankendurchmesser des ersten Gewindes, das heißt das zweite Gewinde überlagert das erste Gewinde in dessen Gewindegrund.

In der DE 26 09 262 A1 wird ein Dentalimplantat beschrieben mit einem Implantathals zur Verankerung eines Aufbauteiles und mit einem zylindrischen Implantatkörper mit einem Außengewinde. Das Außengewinde umfasst ein erstes und ein zweites Gewinde, die einander über die gesamte Länge des Implantatkörpers überlagert sind. Das zweite Gewinde weist einen kleineren Abstand von Gewindegang zu Gewindegang auf als das erste Gewinde, und der Flankendurchmesser des zweiten Gewindes ist größer als derjenige des ersten Gewindes.

In der EP 0 826 343 A2 wird ein Dentalimplantat beschrieben mit einem Implantatkörper, der von einem Außengewinde und einer dem Außengewinde überlagerten wendelförmigen Nut umgeben ist.

Aus der nachveröffentlichten Offenlegungsschrift EP 1 709 937 A1 ist ein Dentalimplantat bekannt mit einem Implantathals zur Verankerung eines Aufbauteiles und mit einem Implantatkörper, der einen zylindrischen mittleren Gewindeabschnitt aufweist, an den sich in apikaler Richtung ein kegeliger Gewindeabschnitt anschließt. In beiden Gewindeabschnitten ist das Gewinde zweigängig ausgestaltet, wobei die beiden Gewindegänge unterschiedliche Gewindetiefen aufweisen.

Aufgabe der vorliegenden Erfindung ist es, ein Dentalimplantat der eingangs genannten Art derart weiterzuentwickeln, dass innerhalb möglichst kurzer Zeit eine stabile Verankerung im Kieferknochen erzielt werden kann.

Diese Aufgabe wird durch ein Dentalimplantat mit den Merkmalen von Patentanspruch 1 gelöst.

Durch die Bereitstellung eines Außengewindes, das zumindest in einem Teilbereich durch die Überlagerung eines ersten und eines zweiten Gewindes gebildet wird, kann eine besonders stabile Verankerung des Implantates im Knochen erzielt werden. Das zweite Gewinde bewirkt eine Oberflächenvergrößerung des Implantates, durch die das Einwachsen des Implantates in den Knochen beschleunigt und eine Lockerung des Implantates insbesondere direkt nach dessen Insertion verhindert wird.

Das zweite Gewinde unterscheidet sich vom ersten Gewinde durch einen geringeren Abstand von Gewindegang zu Gewindegang, das heißt das zweite Gewinde bildet ein Feingewinde aus, wohingegen das erste Gewinde ein Grobgewinde mit verhältnismäßig großem Abstand von Gewindegang zu Gewindegang darstellt. Der Flankendurchmesser des zweiten Gewindes ist größer als der Flankendurchmesser des ersten Gewindes. Die beiden Gewinde können sich außerdem in ihrer Gewindetiefe unterscheiden. Die Gewindetiefe des zweiten Gewindes kann kleiner sein als die Gewindetiefe des ersten Gewindes, so kann die Gewindetiefe des ersten Gewindes beispielsweise 0,3 bis 0,5 mm betragen, wohingegen die Gewindetiefe des zweiten Gewindes kleiner als 0,1 mm sein kann.

Erfindungsgemäß erstreckt sich das zweite Gewinde in crestaler Richtung über das erste Gewinde hinaus. Das erste Gewinde kann beispielsweise im Übergangsbereich zwischen dem Implantatkörper und dem Implantathals enden und das zweite Gewinde kann sich in crestaler Richtung über das erste Gewinde hinaus erstrecken und im Abstand zum crestalen Ende des ersten Gewindes enden.

Das erste Gewinde erstreckt sich in apikaler Richtung über das zweite Gewinde hinaus. Das zweite Gewinde endet im Abstand zum apikalen Ende des Dentalimplantates, wohingegen das erste Gewinde sich bis zu diesem apikalen Ende erstrecken kann.

Das zweite Gewinde ist mehrgängig, es kann insbesondere vier-, fünf- oder sechsgängig ausgestaltet sein. Durch die Mehrgängigkeit können je nach der Tiefe des ersten Gewindes ein oder mehrere Gewindegänge des zweiten Gewindes unmittelbar nebeneinander liegen. Erstreckt sich das zweite Gewinde im Bereich des Implantathalses über das erste Gewinde hinaus, so zeigen sich am Implantathals mehrere Gewindegänge des zweiten Gewindes nebeneinander auf dem auslaufenden ersten Gewinde. Je geringer die Tiefe des ersten Gewindes, umso deutlicher zeigt sich das zweite Gewinde, und durch die Tiefe des ersten Gewindes sowie die Tiefe des zweiten Gewindes ist die Anzahl der auf dem ersten Gewinde mitlaufenden Gewindegänge des zweiten Gewindes steuerbar.

Erfindungsgemäß umfasst das Außengewinde einen zylindrischen Gewindeabschnitt, an den sich in apikaler Richtung ein konischer Gewindeabschnitt anschließt. Vorzugsweise erstreckt sich der konische Gewindeabschnitt bis an das apikale Ende des Dentalimplantates, so dass sich dieses ausgehend vom zylindrischen Gewindeabschnitt bis an seine apikale Spitze über den konischen Gewindeabschnitt kontinuierlich verjüngt.

Besonders günstig ist es, wenn sich das Außengewinde bis in den Bereich des Implantathalses erstreckt. Bei einer derartigen Ausgestaltung weist nicht nur der Implantatkörper ein Außengewinde auf, sondern auch der Implantathals ist zumindest bereichsweise vom Außengewinde umgeben.

Für die Form des zweiten Gewindes sind unterschiedliche Ausgestaltungen geeignet, beispielsweise kann für das zweite Gewinde ein Flankenwinkel von 90° zum Einsatz kommen.

Das erste Gewinde ist bevorzugt eingängig ausgestaltet, die Gewindetiefe beträgt vorzugsweise etwa 0,3 bis ungefähr 0,5 mm. Die Steigung des ersten Gewindes ist bevorzugt größer als 1 mm, sie kann beispielsweise etwa 1,5 mm bis circa 2 mm betragen.

Bei einer vorteilhaften Ausführungsform weist das zweite Gewinde die 0,8-fache bis 1,2-fache Steigung des ersten Gewindes auf. Es kann zum Beispiel vorgesehen sein, dass das zweite Gewinde dieselbe Steigung aufweist wie das erste Gewinde.

Der Konuswinkel des konischen Gewindeabschnittes ist vorzugsweise kleiner als 10°, er kann insbesondere etwa 4° bis ungefähr 8° betragen.

Die Länge des konischen Gewindeabschnittes ist bei einer bevorzugten Ausführungsform kleiner als ein Drittel der Gesamtlänge des Dentalimplantates.

Eine besonders stabile Verankerung im Knochen bei geringer Beanspruchung desselben wird bei einer bevorzugten Ausführungsform der Erfindung dadurch erzielt, dass die Gewindetiefe des ersten Gewindes im konischen Gewindeabschnitt größer ist als im zylindrischen Gewindeabschnitt. Die Gewindetiefe des ersten Gewindes nimmt also in Richtung auf das apikale Ende des Dentalimplantates zu. Im konischen Gewindeabschnitt kann die Gewindetiefe des ersten Gewindes beispielsweise 0,4 bis 0,5 mm betragen, wohingegen sie im zylindrischen Gewindeabschnitt kleiner als 0,4 mm sein kann, insbesondere kann sie im zylindrischen Gewindeabschnitt circa 0,35 mm betragen.

Als günstig hat es sich erwiesen, wenn der Implantathals crestal einen außengewindefreien Endabschnitt aufweist. Vorzugsweise beträgt die Länge des außengewindefreien Endabschnittes etwa 0,1 mm bis circa 2 mm.

Der Implantathals nimmt in üblicher Weise ein Aufbauteil auf. Hierbei ist es von Vorteil, wenn der Implantathals eine ebene Stirnfläche aufweist, denn dadurch lässt sich eine gute Dichtigkeit zwischen dem Aufbauteil und dem Dentalimplantat erzielen.

Es kann vorgesehen sein, dass das crestale Ende des Dentalimplanates angefast ist, es kann also eine im Winkel zur Ebene der Stirnfläche geneigte Fase aufweisen. Der Winkel kann beispielsweise 5° bis 45 ° betragen, insbesondere circa 20° bis etwa 40°. Durch die Fase kann ein auf das Dentalimplantat aufsetzbares Aufbauteil mit einer komplementären Fase selbsttätig zentriert werden. Zusätzlich zur zentrierenden Funktion wird eine gesteigerte Dichtigkeit zwischen Aufbauteil und Dentalimplantat erreicht. Durch die Bereitstellung einer Fase wird der Außendurchmesser der ebenen Stirnfläche verringert. Dies hat den Vorteil, dass für mehrere Dentalimplantate mit unterschiedlichem Implantathalsdurchmesser durch die Bereitstellung einer im geeigneten Winkel zur ebenen Stirnfläche geneigten Fase gleiche Außendurchmesser für die Stirnflächen erzielt werden können, auf die dann identische Aufbauteile mit einer korrespondierenden Stirnfläche aufgesetzt werden können. Durch unterschiedliche Fasenwinkel kann somit sichergestellt werden, dass ein Aufbauteil auf Dentalimplantate mit verschiedenen Implantathalsdurchmessern dicht aufgesetzt werden kann, ohne dass radial überstehende Flächen vorliegen.

Zur Verankerung eines Aufbauteiles im Dentalimplantat ist es günstig, wenn der Implantathals eine Ausnehmung aufweist mit einer Rotationssicherung. In die Ausnehmung kann das Aufbauteil eingesetzt werden, und durch die Rotationssicherung ist gewährleistet, dass Aufbauteil und Dentalimplantat auf konstruktiv einfache Weise drehfest miteinander verbindbar sind. Als Rotationssicherung kann beispielsweise ein Innen-Mehrkant zum Einsatz kommen, beispielsweise ein Innen-Sechskant oder ein Innen-Fünfkant.

Von besonderem Vorteil ist es, wenn die Rotationssicherung über den Innenumfang der Ausnehmung gleichmäßig verteilte Rundzähne aufweist. Die Rotationssicherung kann beispielsweise eine Innenverzahnung nach Art eines Innen-Fünfrundes umfassen.

Von Vorteil ist es, wenn das Dentalimplantat außenseitig zumindest eine Längsnut aufweist. Die Längsnut erstreckt sich vorteilhafterweise ausgehend vom apikalen Ende des Dentalimplantates bis in Höhe des Implantathalses. Sie dient beim Einschrauben des Dentalimplantates als Ablauf und Sammelbecken für Gewebeflüssigkeit und Knochenspäne und übernimmt nach dem Einwachsen des Dentalimplantates die Funktion einer Verdrehsicherung.

Vorzugsweise wird die Längsnut durch zwei im Winkel zueinander ausgerichtete Seitenwände gebildet. Die Seitenwände können senkrecht zueinander ausgerichtet sein, wobei eine erste Seitenwand vorzugsweise in einer Radialebene des zylindrischen Gewindeabschnittes verläuft.

Die Oberfläche des Dentalimplantates ist im Bereich des Außengewindes vorzugsweise aufgerauht. Durch die Aufrauhung wird eine verbesserte Verankerung des Dentalimplantates im Knochen erzielt aufgrund der Vergrößerung der Implantatoberfläche. Außerdem beschleunigt die Oberflächenaufrauhung das Einwachsen des Implantates in den Knochen und verhindert eine Drehbewegung direkt nach der Insertion des Implantates. Es kann somit eine gute Primärstabilität erzielt werden.

Die nachfolgende Beschreibung zweier bevorzugter Ausführungsformen der Erfindung dient im Zusammenhang mit der Zeichnung der näheren Erläuterung. Es zeigen:
- Figur 1:: eine Schnittansicht einer ersten Ausführungsform eines erfindungsgemäßen Dentalimplantates;
- Figur 2:: eine Seitenansicht des Dentalimplantates aus Figur 1 und
- Figur 3:: eine Seitenansicht einer zweiten Ausführungsform eines erfindungsgemäßen Dentalimplantates.

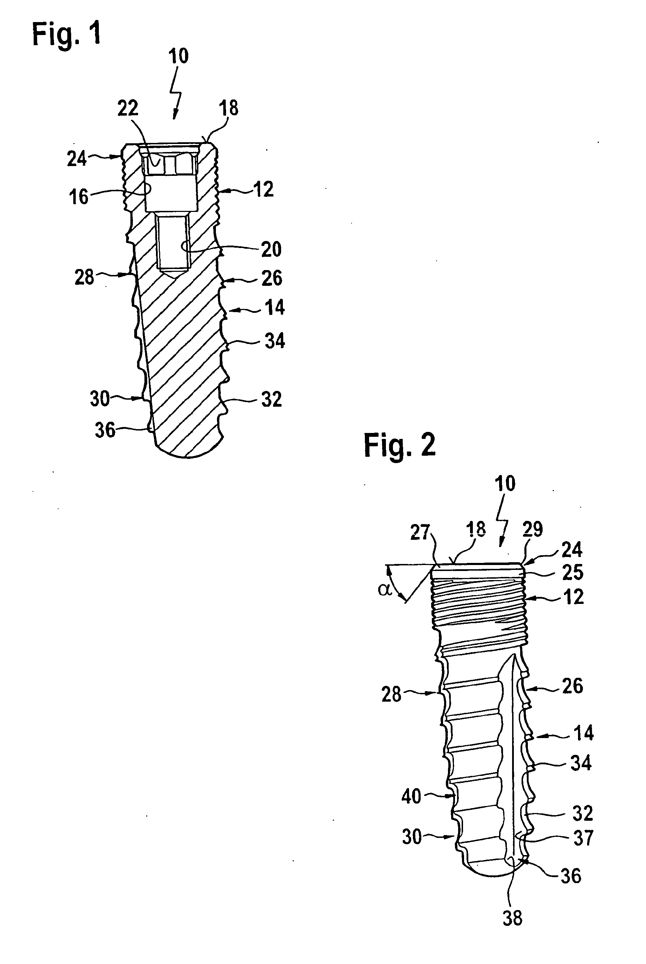

In den Figuren 1 und 2 ist ein erfindungsgemäßes Dentalimplantat 10 dargestellt mit einem zylindrischen Implantathals 12, an den sich in apikaler Richtung ein Implantatkörper 14 anschließt, dessen apikales Ende abgerundet ist. Der Implantathals 12 weist eine Ausnehmung 16 auf, die in eine ebene Stirnfläche 18 des Implantathalses 12 einmündet und in die ein stiftförmiges Endstück eines an sich bekannten und deshalb in der Zeichnung nicht dargestellten Aufbauteiles eingesetzt werden kann. In apikaler Richtung schließt sich an die Ausnehumg 16 eine Sackbohrung mit einem Innengewinde 20 an zum Verschrauben des Aufbauteiles.

Der Stirnfläche 18 benachbart weist die Ausnehmung 16 eine Rotationssicherung in Form einer Innen-Fünfrund-artigen Innenverzahnung 22 auf, die als Formschlusselement für ein Implantierungswerkzeug und darüber hinaus als Drehsicherungselement für das einzusetzende Aufbauteil dient.

Mit Ausnahme eines außengewindefreien Endabschnittes 24 des Implantathalses 12 ist das Dentalimplantat 10 von einem Außengewinde 26 umgeben, das einen vom Implantathals 12 ausgehenden zylindrischen Gewindeabschnitt 28 und einen sich in apikaler Richtung an diesen anschließenden konischen Gewindeabschnitt 30 aufweist.

Der gewindefreie Endabschnitt 24 umfasst einen zylinderförmigen Bereich 25 und einen sich in crestaler Richtung an diesen anschließenden kegelstumpfförmigen Bereich 27, der sich bis an die Stirnfläche 18 erstreckt und eine im Winkel α von beispielsweise 30° zur Ebene der Stirnfläche 18 geneigte Fase 29 ausbildet.

Im Bereich des Implantatkörpers 14 und einem diesem unmittelbar benachbarten Randbereich des Implantathalses 12 wird der zylindrische Gewindeabschnitt 28 des Außengewindes 26 von der Überlagerung eines ersten Gewindes 32 und eines zweiten Gewindes 34 gebildet. Die beiden Gewinde 32 und 34 weisen denselben Außendurchmesser auf, die Gewindetiefe des zweiten Gewindes 34 ist allerdings kleiner als die Gewindetiefe des ersten Gewindes 32 und der Flankendurchmesser des zweiten Gewindes 34 ist größer als der Flankendurchmesser des ersten Gewindes 32. Das erste Gewinde 32 bildet ein Grobgewinde aus mit verhältnismäßig großem Abstand zwischen seinen Gewindegängen, wohingegen das zweite Gewinde 34 ein Feingewinde ausbildet mit einem erheblich geringeren Abstand zwischen seinen Gewindegängen. Das zweite Gewinde 34 erstreckt sich in crestaler Richtung über das erste Gewinde 32 hinaus bis an den Rand des außengewindefreien Endabschnittes 24. Im Bereich des Implantatkörpers 14 erstreckt sich das zweite Gewinde 34 jedoch nur im zylindrischen Gewindeabschnitt 28, wohingegen das erste Gewinde 32 sich in apikaler Richtung über das zweite Gewinde 34 hinaus bis an das apikale Ende des Dentalimplantates 10 erstreckt.

Im zylindrischen Gewindeabschnitt 28 ist die Gewindetiefe des ersten Gewindes 32 geringer als im konischen Gewindeabschnitt 30, im erstgenannten Bereich beträgt die Gewindetiefe bei der dargestellten Ausführungsform 0,356 mm, wohingegen die Gewindetiefe im konischen Gewindeabschnitt 0,433 mm beträgt.

Das zweite Gewinde 34 ist mehrgängig ausgestaltet, bei der dargestellten Ausführungsform ist es viergängig, wohingegen das erste Gewinde 32 eingängig gebildet ist. Die Steigungen der beiden Gewinde 32 und 34 sind gleich, sie betragen in der dargestellten Ausführungsform jeweils 1,7 mm.

Ausgehend vom apikalen Ende des Dentalimplantates 10 erstreckt sich bis in Höhe des Implantathalses an der Außenseite des Dentalimplantates eine erste Längsnut 36, die von zwei rechtwinklig zueinander ausgerichteten Seitenwänden 37, 38 gebildet wird, wobei die Seitenwand 37 bezogen auf den zylindrischen Gewindeabschnitt 28 in einer Radialebene verläuft. In Umfangsrichtung im Abstand zur ersten Längsnut 36 umfasst das Dentalimplantat 10 eine zweite Längsnut 40, die entsprechend der ersten Längsnut 36 ausgestaltet ist und bevorzugt der ersten Längsnut 36 diametral gegenüberliegt.

Die Oberfläche des Dentalimplantates 10, dies ist in der Zeichnung nicht dargestellt, ist im Bereich von dessen Außengewinde 36 aufgerauht, beispielsweise durch Bestrahlen des Dentalimplantates 10 mit Korundpartikeln und/oder durch Ätzen des Dentalimplantes.

Durch die Bereitstellung des aufgerauhten Außengewindes 26, das im Bereich des zylindrischen Gewindeabschnittes 28 aus der Überlagerung eines ersten Gewindes 32 mit verhältnismäßig großem Abstand zwischen seinen Gewindegängen und einem zweiten Gewinde 34 mit verhältnismäßig geringem Abstand zwischen den Gewindegängen gebildet ist, wird eine sehr gute Verankerung des Dentalimplantates 10 im Knochen erzielt. Das zweite Gewinde 34 bewirkt eine beachtliche Oberflächenvergrößerung des Dentalimplantates 10 und ermöglicht eine besonders gleichmäßige Belastung des umgebenden Knochengewebes, so dass lokale Spannungsspitzen, die zu einem Knochenabbau führen könnten, vermieden werden.

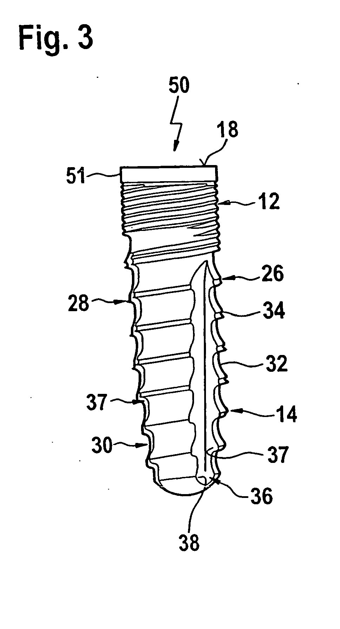

In Figur 3 ist eine zweite Ausführungsform eines erfindungsgemäßen Dentalimplantates dargestellt, das insgesamt mit dem Bezugszeichen 50 belegt ist. Es ist weitgehend identisch ausgestaltet wie das voranstehend erläuterte Dentalimplantat 10, für identische Bauteile werden daher in Figur 3 dieselben Bezugszeichen verwendet wie in den Figuren 1 bis 2 und bezüglich dieser Bauteile wird zur Vermeidung von Wiederholungen auf die voranstehenden Erläuterungen Bezug genommen.

Das Dentalimplantat 50 unterscheidet sich vom Dentalimplantat 10 lediglich dadurch, dass der außengewindefreie Endabschnitt 24 des Implantathalses 12 als Vollzylinder ausgebildet ist und praktisch keine Fase aufweist, wie sie beim Dentalimplantat 10 zum Einsatz kommt.

Auch das Dentalimplantat 50 zeichnet sich durch ein Außengewinde 26 aus, das in einem zylindrischen Gewindeabschnitt 28 aus der Überlagerung eines ersten Gewindes 32 und eines zweiten Gewindes 34 besteht, durch die eine besonders gute Verankerung erzielt wird.

## Patentansprüche

1. Dentalimplantat mit einem Implantathals (12) zur Verankerung eines Aufbauteiles und mit einem Implantatkörper (14), der ein Außengewinde (26) aufweist, wobei das Außengewinde (26) ein erstes und ein zweites Gewinde (32, 34) umfasst, die einander zumindest in einem Teilbereich des Außengewindes überlagert sind, und wobei das zweite Gewinde (34) einen kleineren Abstand von Gewindegang zu Gewindegang aufweist als das erste Gewinde (32) und der Flankendurchmesser des zweiten Gewindes (34) größer ist als der Flankendurchmesser des ersten Gewindes (32), wobei das Außengewinde (26) einen zylindrischen Gewindeabschnitt (28) aufweist, an den sich in apikaler Richtung ein konischer Gewindeabschnitt (30) anschließt, und wobei sich das zweite Gewinde (34) in crestaler Richtung über das erste Gewinde (32) hinaus erstreckt und sich das erste Gewinde (32) in apikaler Richtung über das zweite Gewinde (34) hinaus erstreckt und wobei das zweite Gewinde (34) mehrgängig ist,
**dadurch gekennzeichnet, dass** der zylindrische Gewindeabschnitt (28) im Bereich des Implantatkörpers (14) von der Überlagerung des ersten Gewindes (32) und des zweiten Gewindes (34) gebildet ist.

2. Dentalimplantat nach Anspruch 1, **dadurch gekennzeichnet, dass** sich das Außengewinde (26) bis in den Bereich des Implantathalses (12) erstreckt.

3. Dentalimplantat nach Anspruch 1 oder 2, **dadurch gekennzeichnet, dass** das zweite Gewinde (34) die 0,8-fache bis 1,2-fache Steigung des ersten Gewindes (32) aufweist.

4. Dentalimplantat nach einem der voranstehenden Ansprüche, **dadurch gekennzeichnet, dass** das erste Gewinde (32) eingängig ist.

5. Dentalimplantat nach einem der voranstehenden Ansprüche, **dadurch gekennzeichnet, dass** die Gewindetiefe des ersten Gewindes (32) im konischen Gewindeabschnitt (30) größer ist als im zylindrischen Gewindeabschnitt (28).

6. Dentalimplantat nach einem der voranstehenden Ansprüche, **dadurch gekennzeichnet, dass** der Implantathals (12) crestal einen außengewindefreien Endabschnitt (24) aufweist.

7. Dentalimplantat nach einem der voranstehenden Ansprüche, **dadurch gekennzeichnet, dass** der Implantathals (12) eine ebene Stirnfläche (18) aufweist.

8. Dentalimplantat nach einem der voranstehenden Ansprüche, **dadurch gekennzeichnet, dass** das crestale Ende des Dentalimplantates angefast ist.

9. Dentalimplantat nach einem der voranstehenden Ansprüche, **dadurch gekennzeichnet, dass** der Implantathals (12) eine Ausnehmung (16) aufweist mit einer Rotationssicherung (22).

10. Dentalimplantat nach Anspruch 9, **dadurch gekennzeichnet, dass** die Rotationssicherung über den Innenumfang der Ausnehmung (16) gleichmäßig verteilte Rundzähne aufweist.

11. Dentalimplantat nach einem der voranstehenden Ansprüche, **dadurch gekennzeichnet, dass** das Dentalimplantat (10) außenseitig zumindest eine Längsnut (36, 40) aufweist.

12. Dentalimplantat nach Anspruch 11, **dadurch gekennzeichnet, dass** die mindestens eine Längsnut (36, 40) durch zwei im Winkel zueinander ausgerichtete Seitenwände (37, 38) gebildet ist.

13. Dentalimplantat nach einem der voranstehenden Ansprüche, **dadurch gekennzeichnet, dass** die Oberfläche des Dentalimplantates (10) im Bereich des Außengewindes (26) aufgerauht ist.

## Claims

1. Dental implant with an implant neck (12) for anchoring a structural part and with an implant body (14) having an external screw thread (26), the external screw thread (26) comprising a first and a second screw thread (32, 34) which are superposed on one another at least in a partial area of the external screw thread, the second screw thread (34) having a smaller spacing from screw thread turn to screw thread turn than the first screw thread (32), and the flank diameter of the second screw thread (34) being larger than the flank diameter of the first screw thread (32), the external screw thread (26) having a cylindrical screw thread section (28) which is followed in the apical direction by a conical screw thread section (30), the second screw thread (34) extending in the crestal direction beyond the first screw thread (32), and the first screw thread (32) extending in the apical direction beyond the second screw thread (34), and the second screw thread (34) being multiple-threaded, **characterized in that** the cylindrical screw thread section (28) in the area of the implant body (14) is formed by the superposition of the first screw thread (32) and the second screw thread (34).

2. Dental implant in accordance with claim 1, **characterized in that** the external screw thread (26) extends into the area of the implant neck (12).

3. Dental implant in accordance with claim 1 or 2, **characterized in that** the pitch of the second screw thread (34) is from 0.8 times to 1.2 times the pitch of the first screw thread (32).

4. Dental implant in accordance with any one of the preceding claims, **characterized in that** the first screw thread (32) is single-threaded.

5. Dental implant in accordance with any one of the preceding claims, **characterized in that** the screw thread depth of the first screw thread (32) in the conical screw thread section (30) is larger than in the cylindrical screw thread section (28).

6. Dental implant in accordance with any one of the preceding claims, **characterized in that** the implant neck (12) has in the crestal direction an end section (24) having no external screw thread.

7. Dental implant in accordance with any one of the preceding claims, **characterized in that** the implant neck (12) has a flat end face (18).

8. Dental implant in accordance with any one of the preceding claims, **characterized in that** the crestal end of the dental implant is chamfered.

9. Dental implant in accordance with any one of the preceding claims, **characterized in that** the implant neck (12) has a recess (16) with a device for securing against rotation (22).

10. Dental implant in accordance with claim 9, **characterized in that** the device for securing against rotation has round teeth distributed uniformly over the inside circumference of the recess (16).

11. Dental implant in accordance with any one of the preceding claims, **characterized in that** the dental implant (10) has at least one longitudinal groove (36, 40) on its outside.

12. Dental implant in accordance claim 11, **characterized in that** the at least one longitudinal groove (36, 40) is formed by two side walls (37, 38) aligned at an angle to each other.

13. Dental implant in accordance with any one of the preceding claims, **characterized in that** the surface of the dental implant (10) is roughened in the area of the external screw thread (26).

## Revendications

1. Implant dentaire comprenant une collerette d'implant (12) pour l'ancrage d'une pièce rapportée, et comprenant un corps d'implant (14) qui présente un filetage extérieur (26), le filetage extérieur (26) englobant un premier filetage et un deuxième filetage (32, 34), qui sont mutuellement superposés dans au moins une zone partielle du filetage extérieur, et le deuxième filetage (34) présente une distance de filet à filet plus faible que le premier filetage (32) et le diamètre sur flancs du deuxième filetage (34) est plus grand que le diamètre sur flancs du premier filetage (32), le filetage extérieur (26) présentant un tronçon de filetage cylindrique (28) auquel se raccorde, en direction apicale, un tronçon de filetage conique (30), et le deuxième filetage (34) s'étend, dans la direction crestale, par-dessus le premier filetage (32), et le premier filetage (32) s'étend, dans la direction apicale, par-dessus le deuxième filetage (34), et le deuxième filetage (34) est à filets multiples, **caractérisé en ce que** le tronçon de filetage cylindrique (28) est formé, dans la zone du corps d'implant (14), par la superposition du premier filetage (32) et du deuxième filetage (34).

2. Implant dentaire selon la revendication 1,
**caractérisé en ce que** le filetage extérieur (26) s'étend jusque dans la zone de la collerette d'implant (12).

3. Implant dentaire selon la revendication 1 ou la revendication 2, **caractérisé en ce que** le deuxième filetage (34) présente un pas de 0,8 fois à 1,2 fois le pas du premier filetage (32).

4. Implant dentaire selon l'une des revendications précédentes, **caractérisé en ce que** le premier filetage (32) est à un seul filet.

5. Implant dentaire selon l'une des revendications précédentes, **caractérisé en ce que** la profondeur de filet du premier filetage (32) est plus grande dans le tronçon de filetage conique (30) que dans le tronçon de filetage cylindrique (28).

6. Implant dentaire selon l'une des revendications précédentes, **caractérisé en ce que** la collerette d'implant (12) présente, côté crestal, un tronçon d'extrémité (24) exempt de filetage extérieur.

7. Implant dentaire selon l'une des revendications précédentes, **caractérisé en ce que** la collerette d'implant (12) présente une surface frontale (18) plane.

8. Implant dentaire selon l'une des revendications précédentes, **caractérisé en ce que** l'extrémité crestale de l'implant dentaire est chanfreinée.

9. Implant dentaire selon l'une des revendications précédentes, **caractérisé en ce que** la collerette d'implant (12) comporte un évidement (16) avec un système d'arrêt de rotation (22).

10. Implant dentaire selon la revendication 9,
**caractérisé en ce que** le système d'arrêt de rotation comprend des dents rondes réparties régulièrement le long de la périphérie intérieure de l'évidement (16).

11. Implant dentaire selon l'une des revendications précédentes, **caractérisé en ce que** l'implant dentaire (10) présente sur le côté extérieur, au moins une rainure longitudinale (36, 40).

12. Implant dentaire selon la revendication 11,
**caractérisé en ce que** ladite au moins une rainure (36, 40) est réalisée par deux parois latérales (37, 38) orientées de manière à former un angle l'une par rapport à l'autre.

13. Implant dentaire selon l'une des revendications précédentes, **caractérisé en ce que** la surface de l'implant dentaire (10) a été rendue rugueuse dans la zone du filetage extérieur (26).
